# EUROPEAN PATENT APPLICATION

(11) **EP 1 924 017 A2**
(43) Date of publication of application: **21.05.2008**
(21) Application number: 07120637.9
(22) Date of filing: 14.11.2007
(51) Int. Cl.: H04H 60/27, H04H 60/11

(54) **Mobile communication terminal and method for displaying broadcast storage information therein**

(30) Priority: 14.11.2006 KR 20060112284
(71) Applicant: LG Electronics, Inc., Seoul 150-721 (KR)
(72) Inventor: Shin, Je Yong, Seoul 153-801 (KR)
(74) Representative: Cabinet Plasseraud

(57) **Abstract**

A mobile communication terminal and method for displaying broadcast storage information. The present invention includes receiving at least a portion of a broadcast stream, storing the portion of the broadcast stream that is received, and distinguishably displaying first information related to a stored portion of the broadcast stream and second information related to a portion of the broadcast stream that the terminal failed to store.

## Description

The present invention relates to a mobile communication terminal, and more particularly, to a mobile communication terminal and method for displaying broadcast storage information.

In general, a mobile communication terminal with a broadcast reception function sequentially stores broadcast streams received during a broadcast storage (or recording) mode. However, when a reception state of the broadcast streams is poor, namely, when the broadcast streams cannot be received by the mobile communication terminal, the broadcast streams cannot be stored or recorded.

Therefore, when reproduction of a stored broadcast is desired, the mobile communication terminal can only reproduce a normally received and stored portion of all broadcast streams desired to be stored. Consequently, a user of the mobile communication terminal is not provided with information related to both a normally stored portion and non-stored portion of all broadcast streams desired to be stored.

The present invention is directed to displaying broadcast information in a mobile communication terminal.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, the present invention is embodied in a method for displaying broadcast storage information in a mobile communication terminal. In one embodiment as recited in claim 1, the method comprises receiving at least a portion of a broadcast stream, storing the portion of the broadcast stream that is received and displaying information related to the storage of the broadcast stream. The method is being characterized in that displaying information comprises distinguishably displaying first information related to a portion of the broadcast stream that the terminal stored and second information related to a portion of the broadcast stream that the terminal failed to store.

In accordance with another embodiment of the present invention as recited in claims 13, a mobile communication terminal comprises a transceiver for receiving at least a portion of a broadcast stream, a memory for storing at least the portion of the broadcast stream that is received and information related to the broadcast stream a controller for controlling a display unit to display information related to the storage of the broadcast stream. The terminal is characterized in that said controller controls the storage in the memory of first information related to a portion of the broadcast stream that the terminal stored and of second information related to a portion of the broadcast stream that the terminal failed to store, and outputs a control signal to the display unit to distinguishably display the first and second information.

Other features, advantages and embodiments are recited in the depending claims.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention.

FIG. 1 is a block diagram illustrating a mobile communication terminal in accordance with one embodiment of the present invention.

FIG. 2 is a flowchart illustrating a method for displaying broadcast storage information in the mobile communication terminal in accordance with one embodiment of the present invention.

FIG. 3 is a flowchart illustrating a process of providing broadcast information regarding a non-stored portion in the mobile communication terminal in accordance with one embodiment of the present invention.

FIG. 4 is a state diagram illustrating a process of displaying broadcast storage information during broadcast storage in accordance with one embodiment of the present invention;

FIGS. 5A and 5B are state diagrams illustrating a process of displaying broadcast storage information during broadcast reproduction in accordance with one embodiment of the present invention.

FIG. 6 is a state diagram illustrating a broadcast storage information file created in accordance with one embodiment of the present invention.

FIGS. 7A, 7B and 7C are state diagrams illustrating a process of displaying in a menu format broadcast storage information created in accordance with one embodiment of the present invention.

The present invention relates to a mobile communication terminal displaying broadcast storage information. Reference will now be made in detail to the preferred embodiments of the present invention, examples of which are illustrated in the accompanying drawings. Wherever possible, the same reference numbers will be used throughout the drawings to refer to the same or like parts.

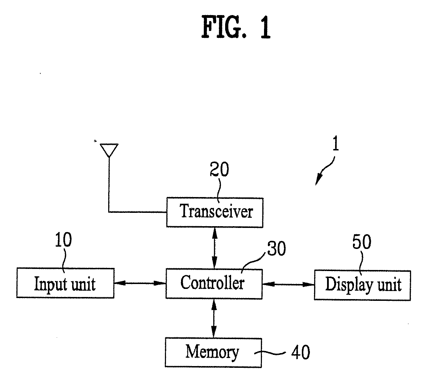

FIG. 1 illustrates a mobile communication terminal in accordance with one embodiment of the present invention. Referring to FIG. 1, the mobile communication terminal 1 comprises an input unit 10 for receiving an input from a terminal user and generating a signal corresponding to the received input, a transceiver 20 for transmitting/receiving a radio frequency signal over a wireless communication network or broadcast network, a memory 40 for storing all data inputted/outputted to/from the mobile communication terminal, a display unit 50 for displaying various information related to the mobile communication terminal, and a controller 30 for respectively controlling operations of the input unit 10, the transceiver 20, the memory 40 and the display unit 50.

Preferably, the controller 30 stores broadcast streams received through the transceiver 20 in the memory 40 according to a user's selection inputted through the input unit 10. Here, the memory 40 may include an internal memory or external memory. Also, broadcast streams to be received preferably include television (TV) broadcast streams or radio broadcast streams.

Preferably, the broadcast streams comprise digital broadcast streams. Accordingly, broadcasting systems providing the digital broadcast streams may be implemented in at least one of a Digital Video Broadcast-Handheld (DVB-H) system, a Media content distribution system Forward Link Only (MediaFLO) system, a Digital Multimedia Broadcasting-Satellite (DMB-S) system, a Digital Multimedia Broadcasting-Terrestrial (DMB-T) system, and a Digital Audio Broadcasting (DAB) system, for example.

The controller 30 also creates information regarding a stored portion and a non-stored portion of the broadcast streams constituting a broadcast program whose storage is selected by the user, according to whether the broadcast streams are received. Particularly, whether the broadcast streams are received is determined according to the reception states of the broadcast streams.

For example, a broadcast stream is not received when the reception state thereof is poor, and is received when the reception state thereof is strong. When the reception strength of the broadcast stream is lower than a minimum reception strength (hereinafter referred to as "reference reception strength") necessary for receiving the broadcast stream, the reception state of the broadcast stream is considered poor. Conversely, when the reception strength of the broadcast stream is higher than or equal to the reference reception strength, the reception state of the broadcast stream is considered strong. Preferably, the created information may include storage capacity information, broadcast channel information, a start time and end time of the stored portion, a start time and end time of the non-stored portion, and so forth.

The controller 30 also controls the display unit 50 to display the created information during storage of the broadcast streams or reproduction of the stored broadcast streams. For example, the information related to the stored portion and the information related to the non-stored portion may be displayed on a bar in different colors or patterns, or displayed in respective percentages.

During reproduction of the broadcast streams stored in the memory 40, the controller 30 controls the transceiver 20 to request broadcast information regarding the non-stored portion from a broadcast management server. Accordingly, the controller 30 also controls the transceiver 20 to receive the broadcast information transmitted from the broadcast management server in response to the request.

Preferably, the broadcast management server is a server managed by a broadcasting service provider or communication service provider. Thus, the broadcast management server is a server that provides various information regarding a broadcast program to the mobile communication terminal. The broadcast information may include at least one of a highlight image/audio and script of broadcast streams corresponding to the non-stored portion.

The controller 30 also controls the display unit 50 to display the received broadcast information for a time corresponding to the non-stored portion among the total storage time of the broadcast streams.

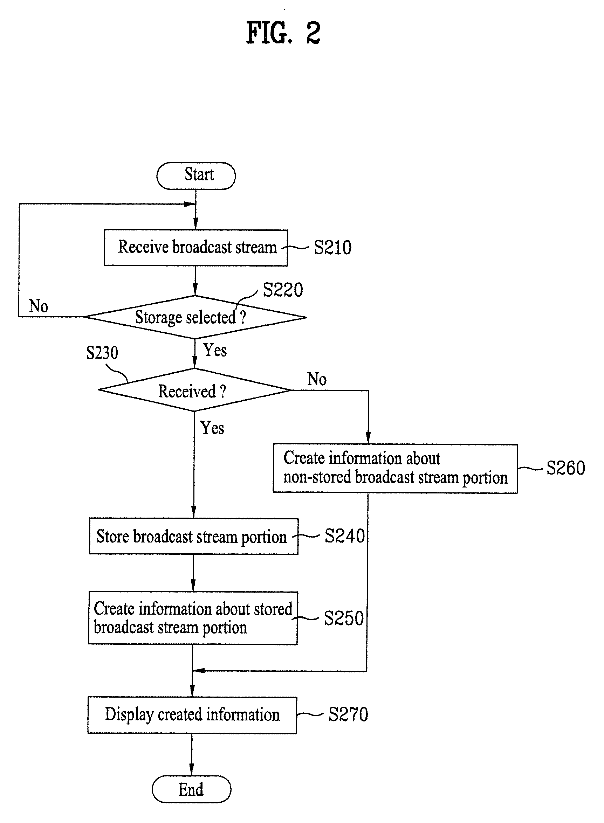

A method for displaying broadcast storage information in the mobile communication terminal in accordance with one embodiment of the present invention will hereinafter be described in detail with reference to FIG. 2. Referring to FIG. 2, the mobile communication terminal is configured to receive a broadcast stream over a broadcast network (S210). Upon reception, the received broadcast stream is outputted through a display or speaker after being subjected to a decoding process.

The mobile communication terminal then determines whether storage of a received broadcast stream is selected by the user (S220). Upon determining that storage of a received broadcast stream is selected, the mobile communication terminal determines whether the broadcast stream whose storage has been selected is completely received (S230).

Notably, during a broadcast stream reception operation, the mobile communication terminal may fail to receive portions of a broadcast stream when the reception state of the broadcast stream is poor, and may receive portions the broadcast stream when the reception state of the broadcast stream is strong. Accordingly, the mobile communication terminal can determine what portions of the broadcast stream of a broadcast program are received based on the reception state of the broadcast stream.

If it is determined that a portion of the broadcast stream, whose storage is selected, is received, the mobile communication terminal stores the received broadcast stream portion (S240). Thereafter, the mobile communication terminal creates information regarding the stored broadcast stream portion (S250). Preferably, the information regarding the stored broadcast stream portion includes a storage start time and end time of the stored broadcast stream portion.

On the other hand, if it is determined that a portion of the broadcast stream, whose storage is selected, is not received, the mobile communication terminal creates information regarding a non-stored broadcast stream portion (S260). Preferably, the information regarding the non-stored broadcast stream portion includes a start time and end time of the non-stored broadcast stream portion.

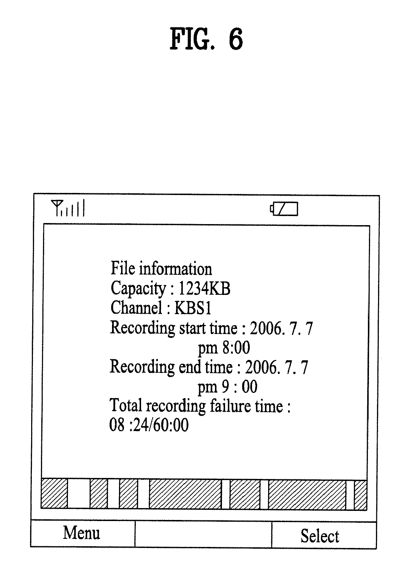

Also, the mobile communication terminal may create and display, upon completion of the storage operation, an information file (S270) including storage capacity information, broadcast channel information, a start time and end time of a stored portion, a start time and end time of a non-stored portion, and a time of the non-stored portion to the total storage time, for example, with respect to broadcast streams stored during the storage operation. The created information file may be displayed as shown in FIG. 6.

The mobile communication terminal may perform the above display operation during storage of the broadcast stream. Alternatively, the mobile communication terminal may perform the display operation during reproduction of the stored broadcast streams.

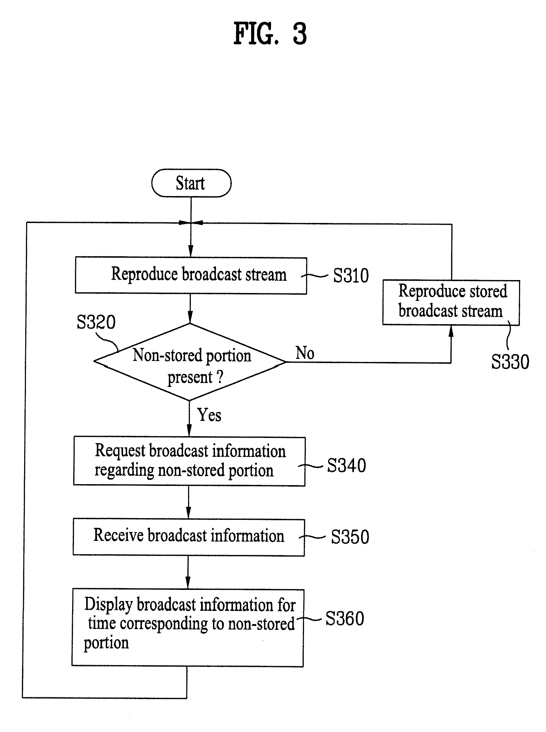

A process of providing broadcast information regarding a non-stored portion in the mobile communication terminal in accordance with one embodiment of the present invention will hereinafter be described in detail with reference to FIG. 3. Referring to FIG. 3, the mobile communication terminal reproduces the stored broadcast stream according to the user's selection (S310) regarding the time of the reproduction. During the reproduction operation, the mobile communication terminal determines whether there is a non-stored portion of the broadcast stream originally desired to be stored (S320).

Upon determining that there is no non-stored portion of the desired broadcast stream, the mobile communication terminal continues to reproduce the stored broadcast stream (S330). On the other hand, if it is determined that there is a non-stored portion of the desired broadcast stream, the mobile communication terminal requests broadcast information regarding the non-stored portion from the broadcast management server (S340).

The mobile communication terminal then receives the broadcast information transmitted from the broadcast management server, in response to the request (S350). The broadcast information preferably includes a highlight image/audio or script of the broadcast stream corresponding to the non-stored portion.

Preferably, the mobile communication terminal displays the received broadcast information for a time corresponding to the non-stored portion (S360) For example, if the broadcast information is a highlight image, the mobile communication terminal may display the highlight image in a slide show fashion. Alternatively, if the broadcast information is a script, the mobile communication terminal may output the script as a text image or audio signal.

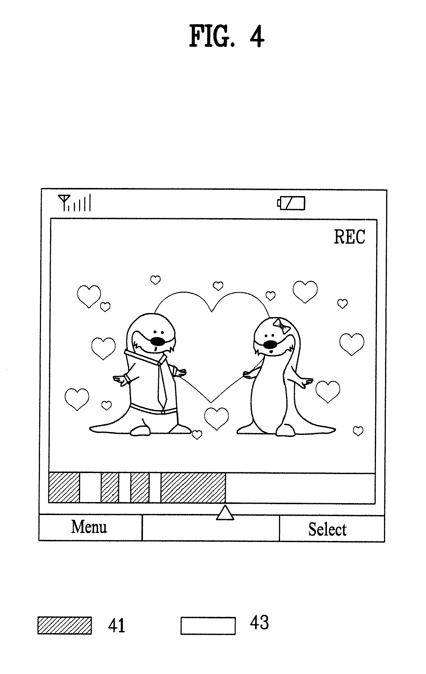

Hereinafter, with reference to FIGS. 4 to 7C, various images including broadcast storage information displayed in accordance with embodiments of the present invention will be described. FIG. 4 shows an image including broadcast storage information displayed during broadcast storage. Referring to FIG. 4, the mobile communication terminal displays information 41 regarding a portion stored according to a strong reception state. Information 43 regarding a portion not stored due to a poor reception state is displayed in different colors or patterns on a bar during the broadcast stream storage.

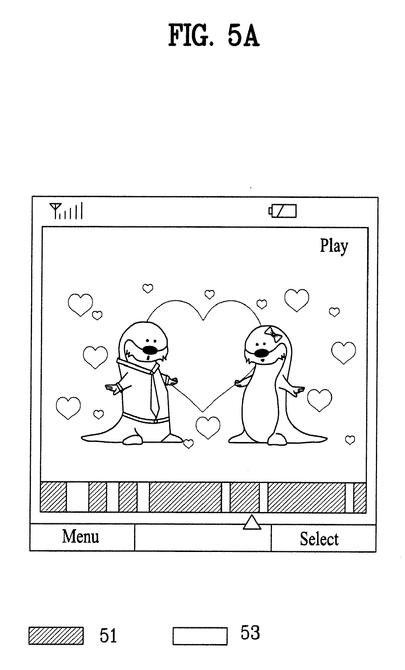

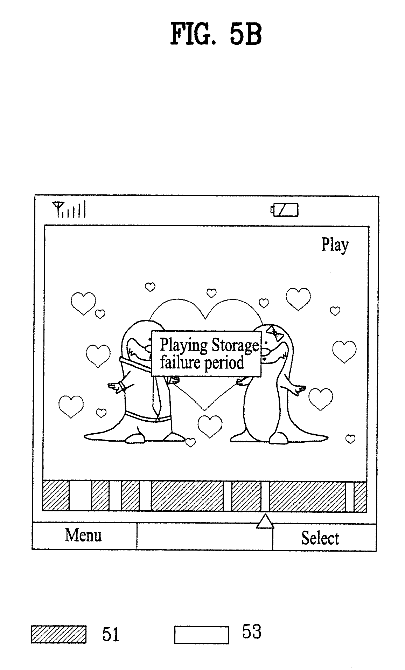

FIGs. 5A and 5B show images including broadcast storage information displayed during broadcast reproduction. In detail, FIG. 5A shows an image into which a portion stored according to a strong reception state is reproduced and displayed. FIG. 5B shows an image notifying storage failure for a period of a portion not stored according to a poor reception state.

As shown in FIGS. 5A and 5B, the mobile communication terminal displays information 51 regarding the stored portion. Information 53 regarding the non-stored portion is displayed in different colors or patterns on a bar during the broadcast reproduction.

In one aspect of the invention, the mobile communication terminal may omit the non-stored portion and reproduce only the stored portion. Alternatively, the mobile communication terminal may display broadcast information regarding broadcast streams corresponding to the ² portion for the period of the non-stored portion.

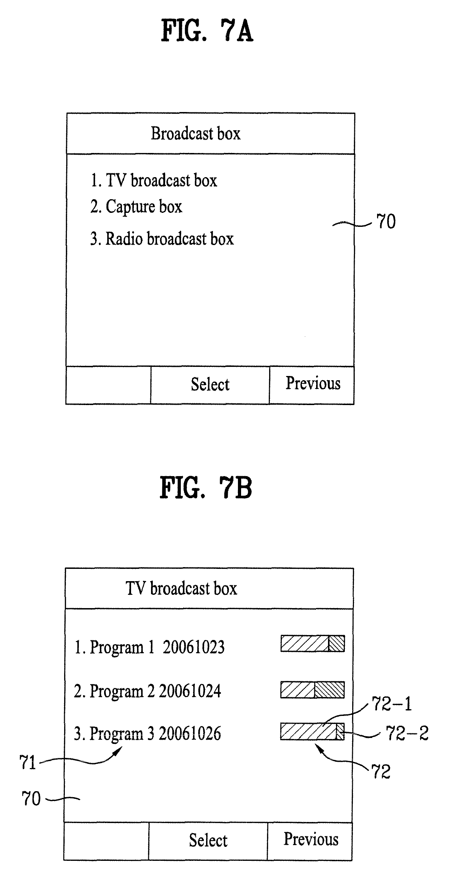

FIGS. 7A to 7C show images including broadcast storage information created and displayed in a menu format in accordance with embodiments of the present invention. As shown in FIG. 7A, when a stored broadcast search is selected by the user, the mobile communication terminal displays a "TV broadcast box" storing TV broadcasts, a "Capture box" storing captured still images, and a "Radio broadcast box" storing radio broadcasts, which are menu items of a "Broadcast box" menu for providing stored broadcasts to the user. Accordingly, when the stored broadcast search is selected by the user, the mobile communication terminal enters a mode for searching stored broadcasts.

The above menu and the details thereof may be configured and provided in various ways by different terminal manufacturers. In one aspect of the invention, when "TV broadcast box" in FIG. 7A is selected, the mobile communication terminal displays a list of stored TV broadcasts, as shown in FIG. 7B.

Referring to FIG. 7B, the mobile communication terminal may display the title and storage date 71 of each of the stored broadcasts. The mobile communication terminal may also distinguishably display information 72-1 regarding a stored portion and information 72-2 regarding a non-stored portion on a bar 72. Preferably, the stored and non-stored portion information are displayed according to the respective ratios of a time of the stored portion and a time of the non-stored portion to the total storage time. Preferably, the stored portion information 72-1 and the non-stored portion information 72-2 may be distinguished by different colors or patterns.

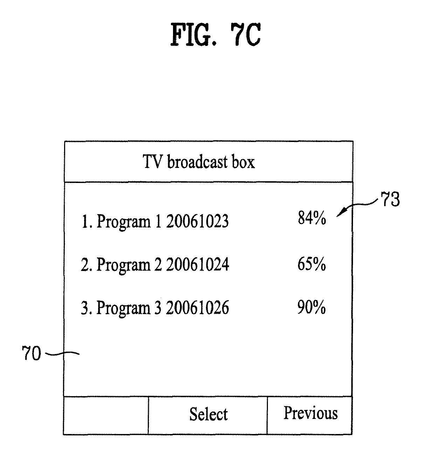

Referring to FIG. 7C, when displaying the list of stored TV broadcasts, the mobile communication terminal may alternatively display the title and storage date of each of the stored broadcasts and then exhibit the ratio of the time of the stored portion to the total storage time as a percentage value. As a result, the user can naturally recognize the ratio of the time of the non-stored portion to the total storage time by observing the ratio of the time of the stored portion to the total storage time.

As apparent from the above description, according to the present invention, it is possible to provide, in detail, information about an actually stored portion and a non-stored portion of an entire broadcast desired to be stored by the user. Furthermore, according to the present invention, broadcast information regarding the non-stored broadcast portion can be received from an external server and then provided to the user.

Furthermore, according to the present invention, information about a time of the non-stored portion can be informed to the user, thus guiding the user to perform a further process, such as downloading, with respect to the non-stored portion.

The so called non-stored portion is more accurately called a portion of the broadcast that the terminal failed to store.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. Method for displaying broadcast storage information in a mobile communication terminal, the method comprising:
receiving (210, 230) at least a portion of a broadcast stream;
storing (240) the portion of the broadcast stream that is received; and
displaying information related to the storage of the broadcast stream,
**characterized in that** displaying information comprises distinguishably displaying (270) first information (41, 51) related to a portion of the broadcast stream that the terminal stored and second information (43, 53) related to a portion of the broadcast stream that the terminal failed to store.

2. Method according to claim 1, wherein the first and second information are displayed in different colors and/or patterns.

3. Method according to any one of claims 1 and 2, wherein the first and second information are displayed according to respective percentages.

4. Method according to any one of claims 1 to 3, wherein the first and second information are displayed during storage of the received portion of the broadcast stream.

5. Method according to any one of claims 1 to 4, further comprising reproducing the stored portion of the broadcast stream, wherein the first and second information are displayed during reproduction of the stored portion of the broadcast stream.

6. Method according to claim 5, wherein the broadcast stream is reproduced for a time corresponding to the length of the stored portion or for a time corresponding to the length of the stored portion and the portion that the terminal failed to store according to a selection of a user of the terminal regarding the reproduction time.

7. The method of claim 5, further comprising:
requesting (340) from a broadcast management server broadcast information related to the portion of the broadcast stream that the terminal failed to store;
receiving (350) the broadcast information transmitted from the broadcast management server in response to the request; and
displaying (360) the received broadcast information for a time corresponding to a length of the portion of the broadcast stream that the terminal failed to store, during reproduction of the broadcast stream.

8. The method of claim 7, wherein the broadcast information comprises at least one of a highlight image/audio and script of the portion of the broadcast stream that the terminal failed to store.

9. Method according to any one of claims 1 to 8, further comprising:
entering a mode for searching one or more broadcasts stored in the mobile communication terminal;
displaying a list (70) of the one or more stored broadcasts; and
distinguishably displaying first information (72-1) related to a stored portion of a broadcast stream and second information (72-2) related to a portion of the broadcast stream that the terminal failed to store for each of the one or more broadcasts on the list.

10. Method according to any one of claims 1 to 9, further comprising determining the stored or failed to stored status for a portion of the broadcast stream based on a reception state of the broadcast stream.

11. Method according to claim 10, wherein the reception state includes the strength of the signal carrying the broadcast stream.

12. Method according to any one of claims 1 to 11, wherein each of said first and second information comprises time information related respectively to the stored portion and to the portion of the broadcast stream that the terminal failed to store.

13. Mobile communication terminal comprising:
a transceiver (20) for receiving at least a portion of a broadcast stream;
a memory (40) for storing at least the portion of the broadcast stream that is received and information related to the broadcast stream; and
a controller (30) for controlling a display unit (50) to display information related to the storage of the broadcast stream;
**characterized in that** said controller controls the storage in the memory of first information (41, 51) related to a portion of the broadcast stream that the terminal stored and of second information (43, 53) related to a portion of the broadcast stream that the terminal failed to store, and outputs a control signal to the display unit to distinguishably display the first and second information.

14. Mobile communication terminal according to claim 13, wherein the first and second information are displayed in different colors and/or patterns.

15. Mobile communication terminal according to any one of claims 13 and 14, wherein the first and second information are displayed according to respective percentages.

16. Mobile communication terminal according to any one of claims 13 to 15, wherein the controller controls the display unit to display the first and second information while controlling the storage of the broadcast stream.

17. Mobile communication terminal according to any one of claims 13 to 16, wherein the controller controls the display unit to display the first information and second information while controlling the reproduction of the stored broadcast stream.

18. The mobile communication terminal of claim 17, wherein the controller reproduces the stored broadcast stream for a time corresponding to the length of the stored portion of the broadcast stream, or the length of the stored portion of the broadcast stream and the portion of the broadcast stream that the terminal failed to store, according to a selection of a user of the terminal regarding the reproduction time.

19. Mobile communication terminal according to claim 17, wherein:
the transceiver request from a broadcast management server broadcast information related to the portion of the broadcast stream that the terminal failed to store, and receives the broadcast information transmitted from the broadcast management server in response to the request; and
the controller controls the display unit to display the received broadcast information for a time corresponding to a length of the portion of the broadcast stream that the terminal failed to store while controlling the reproduction of the broadcast stream.

20. Mobile communication terminal according to claim 19, wherein the broadcast information comprises at least one of a highlight image/audio and script of the portion of the broadcast stream that the terminal failed to store.

21. Mobile communication terminal according to any one of claims 13 to 20, wherein the controller upon entering a broadcast search mode, controls the display unit to display a list (70) of one or more broadcasts stored in the memory, and to distinguishably display first information (72-1) related to a stored portion of a broadcast stream and second information (72-2) related to a portion of the broadcast stream that the terminal failed to store for each of the one or more broadcasts on the list.

22. Mobile communication terminal according to any one of claims 13 to 21, wherein the controller stores or fails to store a portion of the broadcast stream based on a reception state of the broadcast stream.

23. Mobile communication terminal according to claim 22, wherein the reception state includes the strength of the signal carrying the broadcast stream.

24. Mobile communication terminal according to any one of claims 13 to 23, wherein each of said first and second information comprises time information related respectively to the stored portion and to the portion of the broadcast stream that the terminal failed to store.
